# EUROPEAN PATENT APPLICATION

(11) **EP 4 822 863 A1**
(43) Date of publication of application: **14.10.2026**
(21) Application number: 26167669.6
(22) Date of filing: 25.03.2026
(51) Int. Cl.: H01M 50/358, H01M 50/242, H01M 50/262, H01M 50/30

(54) **ELECTRICITY STORAGE PACK**

(30) Priority: 07.04.2025 JP 2025063195
(71) Applicant: Prime Planet Energy & Solutions, Inc., Chuo-ku, Tokyo 103-0022 (JP)
(72) Inventor: OKUDA, Yutaka, Chuo-ku, Tokyo 103-0022 (JP); UEMURA, Yasuaki, Chuo-ku, Tokyo 103-0022 (JP)
(74) Representative: Kuhnen & Wacker Patent- und Rechtsanwaltsbüro PartG mbB

(57) **Abstract**

An electricity storage pack (800) disclosed herein is provided with a case (600) including a body part (610) including a bottom surface (600a) and a bottom surface cover (640) covering a lower side of the bottom surface (600a) of the body part (610). The lower side of the bottom surface (600a) of the body part (610) includes an opening (612H), a ventilation hole (EO), and a recess (611). The opening (612H) is covered by a gas permeable sheet (612M). The ventilation hole (EO) is disposed in an outer peripheral edge of the bottom surface (600a) and is located away from the opening (612H). The recess extends from the opening (612H) to the ventilation hole (EO). The bottom surface cover (640) includes at least one through hole (616) in a region extending from the opening (612H) to the ventilation hole (EO), within a region in which the recess (611) is formed.

## Description

### BACKGROUND

The present disclosure relates to an electricity storage pack.

JP 2017-152164 A discloses an electricity storage apparatus including an outer container and an electricity storage element housed inside the outer container. The publication discloses that the outer container includes a ventilation chamber that communicates the inside and outside of the outer container with each other.

### SUMMARY

When, for example, the outer container (i.e., a case) gets wet because of rain or the like, water may enter the inside of the outer container through the ventilation chamber. In view of this, the present inventors desire to provide the outer container with a sheet that has gas permeability and allows the air to enter from outside to adjust the pressure difference between the inside and outside of the outer container.

However, an investigation carried out by the present inventors revealed that the water that has entered the inside of the outer container may adhere to the just-mentioned sheet. This is undesirable because such an event may impair the functionality of the sheet. Accordingly, that is a need for development of a technique that makes it possible to suitably prevent water from adhering to the sheet.

According to the present disclosure, an electricity storage pack includes a plurality of electricity storage devices and a case including an accommodating space accommodating the plurality of electricity storage devices. The case includes a body part including a bottom surface and a bottom surface cover covering a lower side of the bottom surface of the body part. The lower side of the bottom surface of the body part includes an opening, a ventilation hole, and a recess. The opening is formed at a predetermined position and is covered by a gas permeable sheet. The ventilation hole is disposed in an outer peripheral edge of the bottom surface and is located away from the opening. The recessed portion extends from the opening to the ventilation hole. The bottom surface cover is placed over a peripheral edge portion of the recessed portion. The bottom surface cover also includes at least one through hole in a region in which the recessed portion is formed, the region extending from the opening to the ventilation hole. The present disclosure makes it possible to provide an electricity storage pack including a case including a sheet having gas permeability, which can suitably prevent water from adhering to the sheet.

### BRIEF DESCRIPTION OF THE DRAWINGS

Fig. 1 is a perspective view schematically illustrating an electricity storage pack according to one embodiment of the present disclosure.
Fig. 2 is a perspective view schematically illustrating an electricity storage module shown in Fig. 1.
Fig. 3 is a perspective view schematically illustrating one of the electricity storage devices.
Fig. 4 is a schematic view of the case shown in Fig. 1, viewed from the bottom surface cover end.
Fig. 5 is a drawing in which the bottom surface cover shown in Fig. 4 is shown transparently and the structure directly below the protective cover is visualized.
Fig. 6 is a cross-sectional view taken along line VI-VI in Fig. 5.
Fig. 7 is a schematic view for illustrating through holes according to another embodiment of the present disclosure.

### DETAILED DESCRIPTION

Hereinbelow, preferred embodiments of the technology according to the present disclosure will be described with reference to the drawings. It should be noted that matters that are other than those specifically described in this description but are required to carry out the technology disclosed herein (such as, for example, the general configurations of electricity storage packs that are not characterized by the technology disclosed herein and the manufacturing processes thereof) may be understood as design considerations for a skilled person in the art based on the prior art in the relevant field. The technology disclosed herein may be implemented based on the contents disclosed in this description and the common general technical knowledge in the related field. In the present description and claims, the recitation of numerical ranges "A to B" is meant to include any values between the upper limits and the lower limits, inclusive, that is, "greater than or equal to A to less than or equal to B". The phrase "A to B" is meant to include "greater than A" and "less than B".

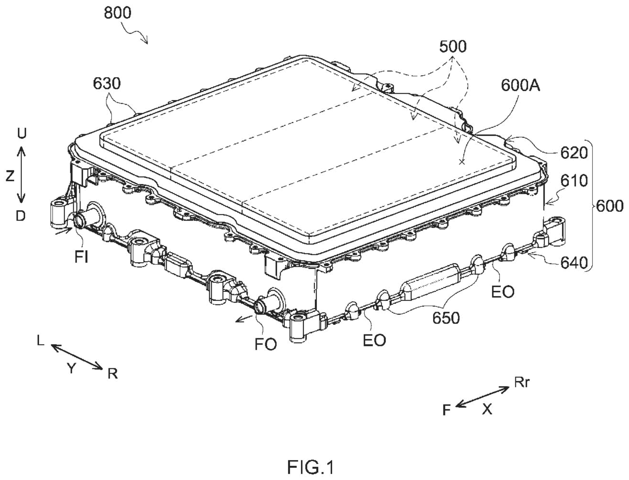

Fig. 1 is a perspective view schematically illustrating an electricity storage pack 800 according to one embodiment of the present disclosure. In the following description, reference characters F, Rr, L, R, U and D in the drawings represent front, rear, left, right, up, and down, respectively, and reference characters X, Y, and Z in the drawings represent a first axis, a second axis that is orthogonal to the first axis, and a third axis that is orthogonal to the first axis and the second axis, respectively. The first axis X is the array axis of later-described electricity storage devices. These directional terms are, however, merely provided for purposes in illustration and are not intended to limit the arrangements and embodiments of the electricity storage modules and the electricity storage devices in any way. Moreover, in the drawings referred to hereinbelow, the parts and components that exhibit the same effects are designated by the same reference symbols, and repetitive description thereof may be simplified or omitted.

As illustrated in Fig. 1, the electricity storage pack 800 according to the present embodiment includes a plurality of electricity storage modules 500 and a case 600. The case 600 is a housing that accommodates the plurality of electricity storage modules 500. The case 600 may be made of any conventionally used material, and there are no particular restriction. The case 600 may preferably be made of metal and, for example, may more preferably made of aluminum, aluminum alloy, iron, iron alloy, stainless steel, or the like. The case 600 of the present embodiment includes a body part 610, a top surface cover 620, and a bottom surface cover 640.

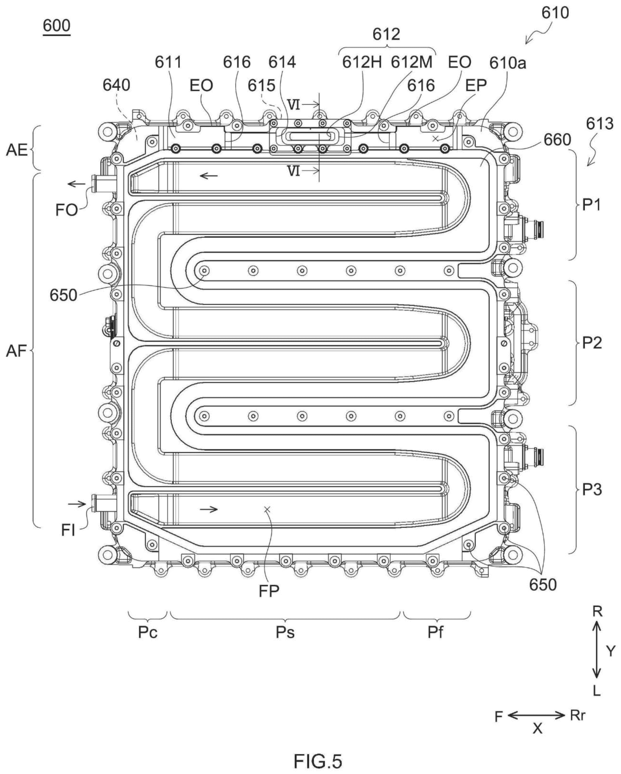

The body part 610 herein has a closed-bottom prismatic tubular shape (i.e., a box shape) including a bottom surface 610a (see Fig. 5) and an opening opposed to the bottom surface 610a. The body part 610 herein is a cast product formed by cast-molding. The top surface cover 620 is a member for sealing the opening of the body part 610. The top surface cover 620 constitutes a first surface (the top surface in Fig. 1) with respect to the third axis Z of the case 600. The body part 610 and the top surface cover 620 are fastened and integrated to each other at a plurality of fastening portions 630 provided on the outer edge of the case 600. The body part 610 and the top surface cover 620 define an accommodating space 600A (first space) of the case 600. The accommodating space 600A accommodates the plurality of electricity storage modules 500.

The bottom surface cover 640 is a member that covers the bottom surface 610a (see Fig. 5) of the body part 610 from the lower side (i.e., from the outer surface side). The bottom surface cover 640 is disposed facing the bottom surface 610a. The bottom surface cover 640 herein is a plate-shaped member. The bottom surface cover 640 constitutes a second surface (the bottom surface in Fig. 1) with respect to the third axis Z of the case 600. The body part 610 and the bottom surface cover 640 are fastened and integrated to each other at a plurality of fastening portions 650 provided on the outer edge of the case 600. Although the details will be provided later, a gas exhaust flow passage EP (second space, see Fig. 5), which exhausts the gas generated from the electricity storage modules 500 in the accommodating space 600A (first space) of the case 600, and a refrigerant flow passage FP (third space, see Fig. 5), in which a refrigerant circulates, are provided between the bottom surface 610a and the bottom surface cover 640 of the body part 610.

As illustrated in Fig. 1, the case 600 is provided with a ventilation hole EO, a flow inlet FI, and a flow outlet FO. The ventilation hole EO is a portion that allows the gas exhaust flow passage EP (see Fig. 5) to communicate with the outside (outside air) of the case 600. A plurality (specifically two herein) of ventilation holes EO are provided herein. The plurality of ventilation holes EO herein are disposed spaced apart along the first axis X (at the front and rear of Fig. 1). As illustrated in Fig. 5, the plurality of ventilation holes EO are provided in the outer peripheral edge of the bottom surface 610a and located away from a first opening 612H.

The flow inlet FI is in communication with the refrigerant flow passage FP (see Fig. 5), and it is a part that allows the refrigerant to flow from the outside of the case 600 into the refrigerant flow passage FP. The flow inlet FI herein is provided on a side surface (Y-Z plane in Fig. 1) of the case 600 (specifically the body part 610). The flow inlet FI is provided on a surface that intersects the top surface cover 620 and/or the bottom surface cover 640. Note that the refrigerant used herein may be any refrigerant conventionally known to be able to be used for this type of use without any particular restriction. One example is a liquid such as a cooling water.

The flow outlet FO is in communication with the refrigerant flow passage FP (see Fig. 5), and it is a part that allows the refrigerant having flowed through the refrigerant flow passage FP to flow out to the outside of the case 600. The flow outlet FO herein is provided on a side surface (Y-Z plane in Fig. 1) of the case 600 (specifically the body part 610). The flow outlet FO herein is provided on the same surface of the case 600 as that on which the flow inlet FI is provided. The flow outlet FO is provided on a surface that intersects the top surface cover 620 and/or the bottom surface cover 640.

As illustrated in Fig. 1, a plurality (specifically 3) of electricity storage modules 500 are provided herein, which are disposed so as to be arrayed along the second axis Y in the accommodating space 600A of the case 600. Note that the number and arrangement of the electricity storage modules 500 are not limited to any particular number or arrangement. The number of electricity storage modules 500 may be, for example, any plural number other than 3, or may be one. The electricity storage modules 500 may also be disposed so as to be arrayed along the first axis X, for example. The configuration of the electricity storage module 500 is not limited to any particular configuration and may be the same as that used conventionally.

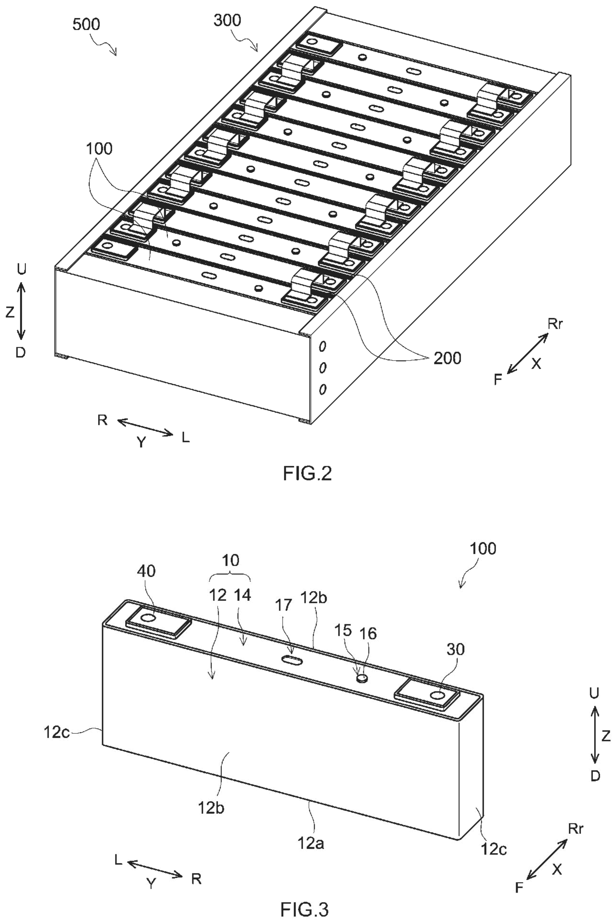

Fig. 2 is a perspective view schematically illustrating an electricity storage module 500. The electricity storage module 500 of the present embodiment includes a plurality of electricity storage devices 100 disposed along an array axis X and spacers 200 disposed between electricity storage devices 100 disposed adjacent to each other along the array axis X. The electricity storage module 500 herein further includes a restraining mechanism 300 configured to apply a specified restraining load to the plurality of electricity storage devices 100 from the array axis X. This allows the plurality of electricity storage devices 100 to be retained integrally.

The spacers 200 are members that keep the plurality of electricity storage devices 100 apart. Each of the spacers 200 may preferably be an insulating member. The spacers 200 herein are disposed respectively between the plurality of electricity storage devices 100 in the array axis X. In other words, in the electricity storage module 500, the electricity storage devices 100 and the spacers 200 are arrayed alternately along the array axis X. The spacers 200 are not essential and may be omitted in other embodiments.

Each of the electricity storage devices 100 is a device that is capable of repeated charging and discharging. In the present description, the term "electricity storage device" is the concept that encompasses secondary batteries, such as lithium-ion secondary batteries and nickel-metal hydride batteries, as well as capacitors, such as lithium-ion capacitors, pseudocapacitors, and electric double-layer capacitors.

The plurality of electricity storage devices 100 are arrayed along the array axis X (the thickness axis of the electricity storage devices 100). In the present embodiment, the electricity storage devices 100 located at even-numbered positions along the array axis X are disposed in a state such as to be rotated 180 degrees (i.e., in an inverted state) relative to the electricity storage devices 100 located at odd-numbered positions along the array axis X. The plurality of electricity storage devices 100 herein have the same shape and size. Note that, however, the shape, size, number, and so forth of the plurality of electricity storage devices 100 constituting the electricity storage module 500 are not limited to those shown in Fig. 2 but may be changed as appropriate.

Fig. 3 is a perspective view illustrating an electricity storage device 100. As illustrated in Fig. 3, the electricity storage device 100 is in a flat prismatic shape. The electricity storage device 100 is a prismatic secondary battery. The electricity storage device 100 of the present embodiment includes a battery case 10, an electrode body, not shown, and an electrolyte solution, not shown. The electricity storage device 100 herein is a non-aqueous electrolyte secondary battery, more specifically, a lithium ion secondary battery.

The battery case 10 is a container that encloses the electrode body and the electrolyte solution. As illustrated in Fig. 3, the battery case 10 has an outer shape in a flat rectangular parallelepiped shape (prismatic shape). The battery case 10 may be made of any conventionally used material, and there are no particular restriction. The battery case 10 may preferably be made of metal and, for example, may more preferably made of aluminum, aluminum alloy, iron, iron alloy, stainless steel, or the like. The battery case 10 herein includes a case body 12 having an opening and a sealing plate 14 (lid) sealing the opening.

The case body 12 herein is in a closed-bottom prismatic tubular shape. The case body 12 includes a lower surface 12a in a substantially rectangular shape having longer sides and shorter sides, longer side surfaces 12b extending respectively from a pair of longer sides of the lower surface 12a and opposed to each other, and shorter side surfaces 12c extending respectively from a pair of shorter sides of the lower surface 12a and opposed to each other. The lower surface 12a is a surface that opposes the bottom surface cover 640 of the case 600. The longer side surfaces 12b are surfaces that are orthogonal to the array axis X. The longer side surfaces 12b herein are surfaces that face (specifically make contact with) the spacers 200. Note that the term "substantially rectangular shape" in the present description is intended to encompass, in addition to complete rectangular shapes (box-like shapes), for example, shapes in which the corners connecting the longer sides and the shorter sides of a rectangular shape have a rounded shape (rounded corner) and shapes in which cut-outs are provided in the corners portions.

The interior of the case body 12 houses the electrode body and the electrolyte solution. The electrode body includes a positive electrode and a negative electrode. The electrolyte solution is typically a non-aqueous electrolyte solution containing a non-aqueous solvent and a supporting salt (electrolyte salt). The electrode body and the electrolyte solution may be the same as conventional ones and are therefore not further elaborated upon.

As illustrated in Fig. 3, the sealing plate 14 is in a substantially rectangular shape as viewed in plan. The sealing plate 14 is a plate-shaped member extending along the X-Y plane. The sealing plate 14 is attached to the opening of the case body 12. The sealing plate 14 forms a surface that faces the bottom surface cover 620 of the case 600. The battery case 10 is integrated by joining (preferably welding) the sealing plate 14 to the peripheral edge of the opening of the case body 12. The battery case 10 is air-tightly sealed (i.e., hermetically sealed).

The sealing plate 14 is provided with a filling port 15, a gas vent valve 17, a positive electrode terminal 30, and a negative electrode terminal 40. The filling port 15 is for filling the electrolyte solution into the interior of the battery case 10 after the sealing plate 14 is attached to the case body 12. The filling port 15 is sealed with a sealing member 16 after filling the electrolyte solution. The gas vent valve 17 is configured to rupture when gas is generated inside the battery case 10 and the internal pressure of the battery case 10 reaches a predetermined value or higher due to the generated gas. This allows the gas generated inside the battery case 10 to be expelled through the gas vent valve 17 to the outside of the battery case 10, specifically, to the accommodating space 600A of the case 600.

The positive electrode terminal 30 and the negative electrode terminal 40 are disposed respectively on the opposite ends, with respect to the second axis Y, of the sealing plate 14. In the case body 12, the positive electrode terminal 30 is electrically connected to the positive electrode of the electrode body. In the case body 12, the negative electrode terminal 40 is electrically connected to the negative electrode of the electrode body.

Each of the positive electrode terminal 30 and the negative electrode terminal 40 is attached to a bus bar that electrically connects a plurality of electricity storage devices 100 to each other. In the present embodiment, in two adjacent electricity storage devices 100 that are adjacent to each other along the array axis X, the positive electrode terminal 30 of one of the electricity storage devices 100 is electrically connected to the negative electrode terminal 40 of the other one of the electricity storage devices 100 by a bus bar. This allows the plurality of electricity storage devices 100 to be electrically connected in series. The way of connecting the plurality of electricity storage devices 100 is not limited to series connection but may be parallel connection, multiple series parallel connection, or the like.

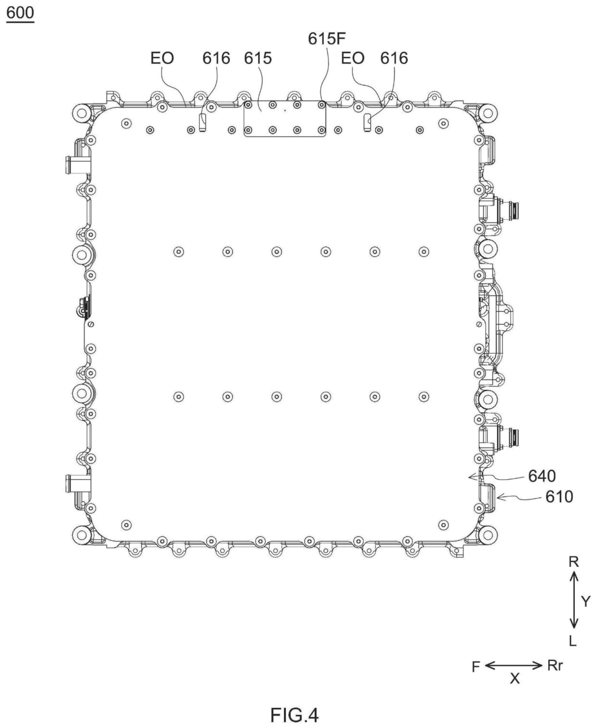

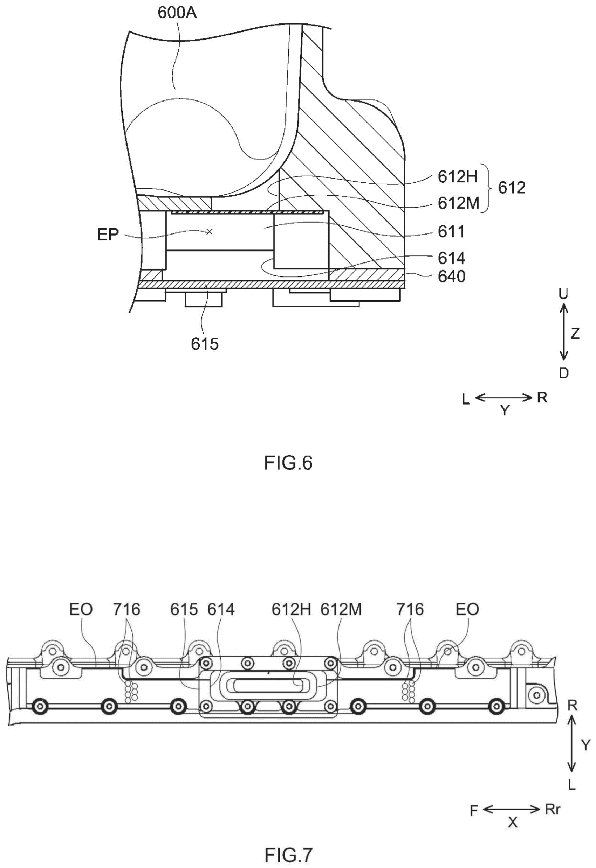

Herein, Fig. 4 is a schematic view of the case 600 shown in Fig. 1, viewed from the bottom surface cover 640 end. Fig. 5 is a drawing in which the bottom surface cover 640 shown in Fig. 4 is shown transparently and the structure directly below a protective cover 615 is visualized. Fig. 6 is a cross-sectional view taken along line VI-VI in Fig. 5.

As illustrated in Fig. 5, the bottom surface 610a of the body part 610 is divided into, as viewed in plan, a gas exhaust area AE located closer to one end of the second axis Y (the upper end of Fig. 5) and a refrigerant area AF located closer to the other end of the second axis Y (the lower end of Fig. 5). The gas exhaust area AE and the refrigerant area AF are provided so as to be adjacent to each other along the second axis Y.

In the gas exhaust area AE, which is located closer to the one end (the right end) of the second axis Y, a gas exhaust flow passage EP is provided between the bottom surface cover 640 and the bottom surface 610a of the body part 610 of the case 600, as illustrated in Fig. 5. As illustrated in Fig. 5, the gas exhaust flow passage EP is in communication with the outside of the case 600 through a plurality of ventilation holes EO. In the lower side (the D side of the Z-axis) of the bottom surface 610a of the body part 610, a first opening 612H exists, which is formed at a predetermined position and is covered by a later-described gas permeable sheet 612M. The gas exhaust flow passage EP is in communication with the accommodating space 600A (first space) of the case 600 through an atmosphere communication part 612. The gas exhaust flow passage EP is a hollow part that constitutes the flow passage of the exhaust gas from the atmosphere communication part 612 to the ventilation holes EO. In the gas exhaust area AE, the bottom surface 610a of the body part 610 includes a gas exhaust recess 611 and the atmosphere communication part 612 in the surface thereof that faces the bottom surface cover 640.

As illustrated in Fig. 5, the gas exhaust recess 611 herein extends linearly along the first axis X. As illustrated in Fig. 6, the gas exhaust recess 611 recesses toward the end that is away from the bottom surface cover 640 (i.e., toward the accommodating space 600A end of the case 600). The gas exhaust recess 611 is a recess that extends from the first opening 612H to the ventilation holes EO. The gas exhaust recess 611 herein is substantially angular C-shaped in cross section. The bottom surface cover 640 is superposed on the peripheral edge portion of the gas exhaust recess 611. The gas exhaust recess 611, together with the bottom surface cover 640, defines the gas exhaust flow passage EP. It is preferable that at least a portion of the gas exhaust recess 611 (or the gas exhaust flow passage EP) be provided at a position such as not to overlap the plurality of electricity storage devices 100, as viewed from top.

As illustrated in Fig. 6, the atmosphere communication part 612 is configured to keep the interior of the accommodating space 600A (first space) of the case 600 at a predetermined pressure (typically atmospheric pressure). The atmosphere communication part 612 includes the first opening 612H (communication hole) and the sheet 612M (what is called a gas permeable film) that closes the first opening 612H. The first opening 612H is provided so as to penetrate the bottom surface 610a of the case 600 along the third axis Z, to allow the accommodating space 600A of the case 600 and the gas exhaust flow passage EP to communicate with each other.

The sheet 612M is a film-shaped member that has gas permeability. The sheet 612M is typically a porous film that has micropores. The sheet 612M is preferably made of resin. Suitable examples of the resin material that forms the sheet 612M include fluororesins such as polytetrafluoroethylene, polyolefin resins such as polyethylene and polypropylene, and polyester resins. The sheet 612M may be made of one of these resins, or may be formed of two or more of these resins. More specifically, for the sheet 612M, it is possible to use a porous film made of polytetrafluoroethylene, polyethylene, or polypropylene, a polyester nonwoven fabric, or the like. The sheet 612M herein is configured to allow the passage of gases, such as the air, but block the passage of liquid, such as water. This prevents water from entering the accommodating space 600A. The thickness of the sheet 612M is, but is not particularly limited to, 1 mm to 10 mm, for example, preferably 1 mm to 5 mm.

As illustrated in Fig. 5, the shape of the sheet 612M as viewed from top is a substantially rectangular shape. The sheet 612M herein has a shape in which the corners connecting the longer sides and the shorter sides of the rectangular shape are in a rounded shape (rounded corners). In other embodiments, the shape of the sheet 612M as viewed from top may be various shapes, including rectangular shapes, circular shapes, elliptical shapes, triangular shapes, and trapezoidal shapes.

The sheet 612M is configured to rupture when the gas vent valve 17 of the electricity storage device 100 ruptures to expel the gas to the accommodating space 600A and the internal pressure of the accommodating space 600A becomes higher than or equal to a predetermined value due to the expelled gas. When the sheet 612M ruptures and the first opening 612H is opened, the gas expelled from the electricity storage device 100 flows through the first opening 612H into the gas exhaust flow passage EP. The gas that has flowed into the gas exhaust flow passage EP is expelled through the ventilation holes EO to the outside of the case 600. In such a manner, gas is expelled from the accommodating space 600A of the case 600.

As illustrated in Figs. 5 and 6, the bottom surface cover 640 includes a second opening 614. In addition, a protective cover 615 is fitted to the peripheral edge portion of the second opening 614 so as to cover the second opening 614. The protective cover 615 is, for example, a plate-shaped member made of metal.

The sheet 612M and the protective cover 615 may be attached successively, for example, after a leakage test described later. Specifically, first, an air leak detection device is inserted through the second opening 614. Next, the air outlet port of the air leak detection device is attached to the first opening 612H to apply the air to the interior of the case 600. Subsequently, changes in the pressure applied to the interior of the case 600 are monitored to check whether or not leakage occurs. Then, if it is confirmed that no leakage occurs, the sheet 612M is affixed to the peripheral edge portion of the first opening 612H, and the protective cover 615 is attached to the peripheral edge portion of the second opening 614. Note that the sheet 612M may be affixed to the second opening 614 using, for example, a resin-based adhesive agent or the like. The protective cover 615 may be attached to the bottom surface cover 640 by, for example, fastening the protective cover 615 to the bottom surface cover 640 by a plurality of fastening portions 615F. In this manner, the sheet 612M and the protective cover 615 may be attached.

If, for example, the case 600 gets wet because of rain or the like, water may enter the inside of the gas exhaust flow passage EP through the ventilation hole EO. Also, because the inside of the case 600 is at a higher temperature than the outside due to the operation of the electricity storage devices 100, the inside of the case 600 may be at a negative pressure. In such a case, the water that has entered the inside of the gas exhaust flow passage EP may adhere to the sheet 612M. The sheet 612M has gas permeability and adjusts the pressure difference between the inside and outside of the case 600 by allowing the air to enter from the outside. However, adhesion of water to the sheet 612M may impair such a function, which is undesirable. Moreover, when such an adjustment of the pressure difference becomes difficult, load is applied to the portions where the sheet 612M is fixed, and the sheet 612M may be broken. In view this, the present inventors discovered forming of through holes 616, which is described below.

As illustrated in Fig. 5, in the present embodiment, the through holes 616 are present in a region extending from the first opening 612H to the ventilation holes EO, within the region in which the gas exhaust recess 611 is formed. The through holes 616 traverse across the gas exhaust recess 611, which extends from the position where the first opening 612H is formed to communicate with the ventilation holes EO. More specifically, the through holes 616 are disposed so as to traverse across the gas exhaust recess 611 from the ventilation hole EO end (i.e., the R end along the Y-axis in Fig. 5) toward the opposite end to the ventilation holes EO (i.e., the L end along the Y-axis in Fig. 5).

As illustrated in Fig. 5, in the present embodiment, the through hole 616 is substantially rectangular-shaped when viewed from an opening portion thereof. The through hole 616 herein has a shape in which the corners connecting the longer sides and the shorter sides of the rectangular shape are in a rounded shape (rounded corners). The ratio of the shorter side and the longer side of the through hole 616 may be, for example, from 1:2 to 1:10, or may be from 1:5 to 1:10. It is preferable that the size of the through hole 616 be determined to be an appropriate size depending on the size of the gas exhaust recess 611 or the like. In one embodiment, the length of the shorter sides of the through hole 616 is from 1 mm to 10 mm, or may be from 1 mm to 5 mm. In one embodiment, the length of the longer sides of the through hole 616 is from 2 mm to 20 mm, or may be from 5 mm to 15 mm. In other embodiments, the shape of the through hole 616 as viewed from top may be various shapes, including rectangular shapes, circular shapes, elliptical shapes, triangular shapes, and trapezoidal shapes.

As illustrated in Fig. 5, in the present embodiment, the number of the through holes 616 is 2. The two through holes 616 herein are disposed so that one through hole is provided on each side, on the left and right, of the first opening 612H. In other embodiments, the number of the through holes 616 may be a plural number other than two, or may be one.

The through holes 616 may be formed by, for example, a punching process performed on the bottom surface cover 640. Alternatively, the through holes 616 may also be formed by, for example, a laser process performed on the bottom surface cover 640.

In the refrigerant area AF, which is located closer to the other end (the left end) of the second axis Y, the refrigerant flow passage FP in which refrigerant circulates and a sealing member 660 that are affixed to the bottom surface 610a of the body part 610 and the bottom surface cover 640 to seal the refrigerant flow passage FP are provided between the bottom surface cover 640 and the bottom surface 610a of the body part 610 of the case 600, as illustrated in Fig. 5. As illustrated in Fig. 5, the refrigerant flow passage FP is a hollow part that constitutes the flow passage of the refrigerant from the flow inlet FI to the flow outlet FO.

As illustrated in Fig. 5, a refrigerant recess 613 recesses toward the end that is away from the bottom surface cover 640 (i.e., toward the accommodating space 600A end of the case 600). The refrigerant recess 613 herein is substantially angular C-shaped in cross section. The depth of the refrigerant recess 613 (the maximum length of the recess that is recessed from the outside surface of the bottom surface 610a along the third axis Z, likewise hereinafter) herein is greater than that of the gas exhaust recess 611. The refrigerant recess 613, together with the bottom surface cover 640, defines the refrigerant flow passage FP. It is preferable that at least a portion of the refrigerant recess 613 (or the refrigerant flow passage FP) is provided at a position such as to face the accommodating space 600A that accommodates the plurality of electricity storage devices 100. It is preferable that at least a portion of the refrigerant recess 613 (the refrigerant flow passage FP) is provided at a position such as to overlap the plurality of electricity storage devices 100, as viewed from top. Because the refrigerant flows directly below the plurality of electricity storage devices 100, cooling can be carried out efficiently.

As illustrated in Fig. 5, the refrigerant recess 613 is provided such as to have substantially a U shape directly below each of the plurality of electricity storage modules 500. In the example shown in Fig. 5, a substantially U-shaped first portion P1 is provided directly below a first electricity storage module 500, a substantially U-shaped second portion P2 is provided directly below a second electricity storage module 500, and a substantially U-shaped third portion P3 is provided directly below a third electricity storage module 500, Each of the first to third portions P1 to P3 includes a linear portion Ps extending along the first axis X and a curved portion Pf connecting a pair of linear portions Ps. The first to third portions P1 to P3 are in communication with each other via connectiong portions Pc formed in a substantially angular C shape. As indicated by arrows in Fig. 5, the refrigerant that has flowed from the flow inlet FI into the refrigerant flow passage FP flows through the first portion P1, the second portion P2, and the third portion P3 in that order, and thereafter flows out from the flow outlet FO to the outside of the case 600.

As described above, the electricity storage pack 800 according to the present embodiment includes a plurality of electricity storage devices 100 and a case 600 including an accommodating space 600A accommodating the plurality of electricity storage devices 100. The case 600 includes a body part 610 including a bottom surface 610a and a bottom surface cover 640 covering the lower side of the bottom surface 610a of the body part 610. The lower side of the bottom surface 610a of the body part 610 includes an opening (the first opening 612H herein), ventilation holes EO, and a recess (the gas exhaust recess 611 herein). The first opening 612H is formed at a predetermined position and is covered by a gas permeable sheet 612M. The ventilation holes EO are disposed at positions in the outer peripheral edge of the bottom surface 610a that are located away from the first opening 612H. The gas exhaust recess 611 is a recess that extends from the first opening 612H to the ventilation holes EO. The bottom surface cover 640 is superposed on the peripheral edge portion of the gas exhaust recess 611. Here, the electricity storage pack 800 according to the present embodiment includes at least one through hole 616 in a region extending from the first opening 612H to the ventilation holes EO, within the region in which the gas exhaust recess 611 is formed. Such a configuration allows the water that has entered the gas exhaust recess 611 from the ventilation holes EO to be expelled through the through hole 616, so water is unlikely to adhere to the sheet 612M, which covers the first opening 612H. This can suitably prevent water from adhering to the sheet 612M. Moreover, such a through hole 616 can be formed in the bottom surface cover 640 easily (with a small number of man-hours), which is preferable also from the viewpoint of cost.

As described above, in the electricity storage pack 800 according to the present embodiment, the through holes 616 traverse across the gas exhaust recess 611, which extends from the position where the first opening 612H is formed to communicate with the ventilation holes EO. Such a structure allows the water that has entered the gas exhaust recess 611 to be expelled from the through holes 616 more reliably before the water reaches the sheet 612M. This prevents the water that has entered the gas exhaust recess 611 from reaching the sheet 612M covering the first opening 612H, which is desirable.

As described above, in the electricity storage pack 800 according to the present embodiment, the through holes 616 are substantially rectangular-shaped when viewed from the opening portions thereof. Such a structure allows the water that has entered the gas exhaust recess 611 to be expelled from the through holes 616 easily. In other words, the through holes 616 in such a shape are particularly outstanding in water draining capability. This prevents the water that has entered the gas exhaust recess 611 from reaching the sheet 612M covering the first opening 612H, which is desirable.

As described above, in the electricity storage pack 800 according to the present embodiment, the sheet 612M is made of at least one selected from the group consisting of a fluororesin, a polyolefin resin, and a polyester resin. The sheet 612M made of the above-described material is particularly prone to water adhering thereto. For this reason, the electricity storage pack 800 including such a sheet 612M is suitable as the subject to which the technology of the present disclosure is applied.

The electricity storage pack 800 disclosed herein may be used in various applications, and for example, may be suitably used as a power source (drive power source) for motors that are incorporated in vehicles, such as passenger vehicles and trucks. Examples of the vehicles may include, but are not particularly limited to, plug-in hybrid electric vehicles (PHEVs), hybrid electric vehicles (HEVs), and battery electric vehicles (BEVs).

Hereinabove, preferred embodiments of the present invention have been described, but the foregoing embodiments are merely exemplary. The present invention may be practiced in various other forms. The present invention may be implemented based on the contents disclosed herein and the common general technical knowledge in the related field. Various modifications and alterations of the embodiments illustrated hereinabove are within the scope of the invention as defined by the appended claims.

For example, Fig. 7 is a schematic view for illustrating through holes 716 according to another embodiment. As illustrated in Fig. 7, in this embodiment, the through holes 716 are circular shaped when viewed from the opening portions thereof. Such a structure is able to more suitably prevent the rigidity of the bottom surface cover 640 from decreasing because the through holes 716 are disposed in a distributed arrangement. As illustrated in Fig. 7, in this embodiment, the number of the through holes 716 is 14. The through holes 716 herein are provided so that seven through holes are disposed on each side, on the left and right, of the first opening 612H. However, in other embodiments, the number of the through holes 716 may be a plural number other than 14, or may be one. In addition, although this embodiment provides the same number of the through holes 716 on each side, on the left and right, it is possible that different numbers of the through holes 716 may be provided on each side. The through holes 716 may be formed, for example, in the same manner as that used for the previously-described through holes 616.

For example, in the foregoing embodiments, the electricity storage pack 800 accommodates electricity storage modules 500 each including a plurality of electricity storage devices 100, but this is merely exemplary. In other embodiments, the electricity storage pack 800 may employ what is called a cell-to-pack structure, in which a plurality of electricity storage devices 100 are directly housed therein without forming electricity storage modules 500 or the like.

As has been described above, the specific embodiments of the technology disclosed herein may include those set forth in the following items.

### Item 1:

An electricity storage pack including:
a plurality of electricity storage devices; and
a case including an accommodating space accommodating the plurality of electricity storage devices, wherein:
   the case includes:
      a body part including a bottom surface; and
      a bottom surface cover covering a lower side of the bottom surface of the body part; and
   the lower side of the bottom surface of the body part includes:
      an opening formed at a predetermined position and covered by a gas permeable sheet;
      a ventilation hole disposed in an outer peripheral edge of the bottom surface and located away from the opening; and
      a recess extending from the opening to the ventilation hole; and
   the bottom surface cover is superposed on a peripheral edge portion of the recess; and
      the bottom surface cover includes at least one through hole in a region extending from the opening to the ventilation hole, within a region in which the recess is formed.

### Item 2:

The electricity storage pack according to item 1, wherein the through hole traverses across the recess extending from a position where the opening is formed to communicate with the ventilation hole.

### Item 3:

The electricity storage pack according to item 1 or 2, wherein the through hole has a substantially rectangular shape when viewed from an opening portion of the through hole.

### Item 4:

The electricity storage pack according to any one of items 1 to 3, wherein the sheet is made of at least one selected from the group consisting of a fluororesin, a polyolefin resin, and a polyester resin.

## Claims

1. An electricity storage pack (800) comprising:
a plurality of electricity storage devices (100); and
a case (600) including an accommodating space (600A) accommodating the plurality of electricity storage devices (100), wherein:
the case (600) comprises:
a body part (610) including a bottom surface (600a); and
a bottom surface cover (640) covering a lower side of the bottom surface (600a) of the body part (610); and
the lower side of the bottom surface (600a) of the body part (610) includes:
an opening (612H) formed at a predetermined position and covered by a gas permeable sheet (612M);
a ventilation hole (EO) disposed in an outer peripheral edge of the bottom surface (600a) and located away from the opening (612H); and
a recess (611) extending from the opening (612H) to the ventilation hole (EO); and
the bottom surface cover (640) is superposed on a peripheral edge portion of the recess (611); and
the bottom surface cover (640) includes at least one through hole (616) in a region extending from the opening (612H) to the ventilation hole (EO), within a region in which the recess (611) is formed.

2. The electricity storage pack (800) according to claim 1, wherein the through hole (616) traverses across the recess (611) extending from a position where the opening (612H) is formed to communicate with the ventilation hole (EO).

3. The electricity storage pack (800) according to claim 1 or 2, wherein the through hole has a substantially rectangular shape when viewed from an opening portion of the through hole (616).

4. The electricity storage pack (800) according to any one of claims 1 to 3, wherein the sheet (612M) is made of at least one selected from the group consisting of a fluororesin, a polyolefin resin, and a polyester resin.
